# FASCICULE DE BREVET EUROPEEN

(11) **EP 2 615 948 B1**
(45) Date de publication et mention de la délivrance du brevet: **14.12.2016**
(21) Numéro de dépôt: 11773499.6
(22) Date de dépôt: 14.09.2011
(51) Int. Cl.: A47G 1/02, G09F 13/18, B44F 1/04

(54) **PANNEAU MIROIR ET ÉCLAIRANT A DIODES ELECTROLUMINESCENTES**
BELEUCHTUNGSSPIEGELPLATTE MIT LEUCHTDIODEN
ILLUMINATING MIRROR PANEL COMPRISING LIGHT EMITTING DIODES

(30) Priorité: 15.09.2010 FR 1057351
(43) Date de publication de la demande: 24.07.2013
(73) Titulaire: Saint-Gobain Glass France, 92400 Courbevoie (FR)
(72) Inventeur: ARMAND, Philippe, F-75004 Paris (FR); MONTGERMONT, Aude, F-75009 Paris (FR); ZHANG, Jingwei, F-91300 Massy (FR)
(74) Mandataire: Saint-Gobain Recherche
(86) Numéro de dépôt international: PCT/FR2011/052101
(87) Numéro de publication internationale: WO 2012/035258

(56) Documents cités:
- EP-A1- 1 623 657
- WO-A1-03/010105
- DE-U1- 9 016 695
- DE-U1-202004 000 705
- FR-A1- 2 744 117
- FR-A1- 2 895 781
- GB-A- 2 279 763
- US-A1- 2006 077 580
- US-A1- 2010 124 074

## Description

L'invention concerne le domaine des panneaux miroir et éclairant et en particulier les panneaux miroirs et éclairant à diodes électroluminescentes.

Les modèles les plus usuels des miroirs éclairants, utilisés dans les salles de bain, emploient une feuille de verre avec :
- une zone miroir par dépôt sur sa face arrière d'une argenture ;
- et, pour former la zone éclairante adjacente à la zone miroir, des tubes fluorescents positionnés en face arrière de la feuille de verre
la lumière visible en face avant étant directement transmise via la feuille de verre présentant une surface sablée dans la zone en regard des tubes pour diffuser la lumière.

Toutefois, ces dispositifs sont encombrants et nécessitent une maintenance régulière pour remplacer les tubes fluorescents défectueux. De plus, les tubes fluorescents contiennent du mercure, métal lourd polluant (les tubes étant souvent jetés hors de tout circuit de recyclage) et dangereux (par exemple lors de la casse d'un tube).

En outre, l'éclairage procuré est relativement agressif et manque d'homogénéité.

Pour pallier les inconvénients des tubes fluorescents, se développe de plus en plus dans les applications d'éclairage, l'utilisation de diodes électroluminescentes (diodes ou LED en anglais), qui présentent les avantages d'une faible consommation électrique et d'une longévité fonctionnelle.

On connaît de la demande de brevet européen EP 1 834 551 un panneau miroir et éclairant à diodes électroluminescentes. Un tel panneau est conçu par l'assemblage en feuilleté d'une feuille de verre réfléchissante remplissant la fonction de miroir, par une argenture en face arrière recouverte de manière classique d'une peinture de protection, d'une structure claire médiane formant intercalaire de feuilletage, et d'une feuille de verre clair en façade.

Les diodes sont insérées dans l'intercalaire de feuilletage de polyvinyl butyral (PVB) de 0,76 mm et connectées par une couche électroconductrice avec des zones isolées déposées sur la feuille de verre réfléchissante. Les diodes comportent des moyens directionnels pour orienter les rayons de manière sensiblement perpendiculaire à la feuille de verre clair.

Les diodes sont en outre réparties tout autour d'une fenêtre transparente formée dans la feuille de verre clair de façade de 3,15 mm. La surface en regard des diodes est sablée pour disperser la lumière. Le miroir est central.

Cependant, un tel panneau est compliqué à produire; onéreux, et ses performances optiques ne sont pas optimales.

Le document DE 20 2004 000705 U1 décrit un panneau miroir et éclairant suivant le préambule de la revendication 1.

L'invention a pour but de proposer un panneau miroir et éclairant à diodes électroluminescentes plus simple, plus performant optiquement et davantage compatible avec les exigences industrielles (facilité et rapidité de production, fiabilité, ...).

Le panneau miroir et éclairant selon l'invention doit être en particulier durable dans le temps et avec un éclairage qui soit non éblouissant.

A cet effet, la présente invention propose un panneau miroir et éclairant à diodes électroluminescentes comportant :
- une première feuille transparente de verre, en verre minéral voire organique, notamment sensiblement plan, avec deux faces principales, respectivement dites face avant et face arrière, et une tranche,
- une couche réfléchissante pour assurer la fonction de miroir via la face avant, dans une première zone dite zone miroir,
- des diodes électroluminescentes, fournissant la fonction d'éclairage, diodes ayant naturellement un spectre d'émission donné dans le visible,
- des moyens de diffusion de la lumière sortant par la face avant, dits moyens diffusants, formant ainsi une deuxième zone, dite zone éclairante, adjacente à la zone miroir (accolée ou espacée de la zone miroir), les diodes étant couplées optiquement à la tranche de la première feuille de verre pour un guidage (au moins) dans l'épaisseur de la première feuille de verre de la lumière émise par les diodes avant une extraction de la lumière des diodes par les moyens diffusants, la couche réfléchissante selon l'invention étant une couche disposée du côté de la face avant (côté observateur), notamment directement sur la face avant, et étant absente de la zone éclairante, la couche réfléchissante comprenant une couche mince métallique, donc à base de métal, notamment en métal pur ou allié, caractérisé en ce que cette couche mince métallique est choisie parmi une couche de chrome,de niobium, de nitrure de niobium,ou d'acier et en ce que dans la zone miroir, la première feuille de verre avec la couche réfléchissante présente en outre une transmission lumineuse (classiquement dénommée TL) inférieure ou égale à 25% (dans le spectre visible), voire inférieure ou égale à 10%, notamment supérieure ou égale à 1%, et une réflexion lumineuse (classiquement dénommée RL) mesurée du côté de la face avant à partir d'au moins 20% (dans le spectre du visible), voire d'au moins 35% voire même d'au moins 50% et en ce que au dessus de la couche mince métallique est disposée une surcouche minérale, diélectrique, qui est un oxyde et/ ou un nitrure.

Dans ce panneau selon l'invention, la propagation par guidage de lumière dans la feuille de verre réduit déjà de manière significative l'éblouissement. Dans l'art antérieur sont formées des points (taches focales) trop lumineux en regard des diodes, le contraste entre ces points et les zones entre les diodes étant important même avec des moyens diffusants.

Le positionnement latéral des diodes selon l'invention est en outre plus simple pour le montage comme l'éventuel démontage (changement de diodes défectueuses, de couleur d'éclairage, de luminosité souhaitée.) Il est ainsi possible de réaliser des tests des diodes avant intégration au panneau, cela réduit ainsi le taux de rebut du panneau.

Cela permet aussi de réduire l'épaisseur du panneau si cela est souhaité.

Toutefois, dans une configuration de propagation par guidage et d'extraction de la lumière guidée, la Demanderesse a constaté que si la couche réfléchissante formant miroir (argenture ou autre) était placée en face arrière alors la lumière guidée révélait la présence de défauts dans le verre (bulles, inclusion etc) et/ou à l'interface verre - couche réfléchissante arrière, conduisant à un miroir inesthétique et augmentant le taux de rebut de manière inacceptable.

Aussi, pour supprimer les pertes de rendement engendrées par ces défauts, on choisit de placer la couche réfléchissante selon l'invention du côté de la face avant et de limiter suffisamment la transmission lumineuse (côté face avant) pour diminuer l'intensité des rayons lumineux renvoyés par les défauts vers la face avant et donc réduire significativement voire même supprimer l'observation de ces défauts.

On choisit en outre une réflexion lumineuse RL minimale pour une fonction miroir satisfaisante.

Naturellement pour avoir un miroir durable on choisit une couche réfléchissante qui n'a pas besoin d'être protégée ou dont la ou les surcouches (de protection) ne perturbent pas la fonction miroir.

Dans la présente invention, on entend par « diodes électroluminescentes » (ou de manière raccourcie diodes) des sources quasi ponctuelles, généralement inorganiques, à base de puces semi-conductrices, notamment sources distinctes des OLED (diodes organiques) procurant des grandes surfaces éclairantes.

Le panneau miroir et éclairant selon l'invention peut être à usage domestique, notamment dans une salle de bain, des toilettes, ou industriel, notamment une piscine, un sauna, un hammam.

De préférence, la couche mince métallique (ou les couches minces métalliques) est déposée par dépôt physique en phase vapeur, notamment par pulvérisation cathodique magnétron.

La couche mince métallique est choisie parmi une couche de chrome, de niobium, de nitrure de niobium, ou d'acier de préférence inoxydable, par exemple couche mince métallique déposée par dépôt physique en phase vapeur, notamment par pulvérisation cathodique magnétron.

Dans la présente invention on entend par couche mince, une monocouche d'épaisseur submicronique, de préférence d'épaisseur inférieure 300 nm, voire à 150 nm et mieux encore inférieure ou égale à 100 nm. L'épaisseur de l'argenture de l'art antérieur est de plusieurs microns.

La couche réfléchissante est de préférence dépourvu de film polymérique (de protection etc) la couvrant.

Au dessus de la couche mince métallique (en s'éloignant de la face avant) est disposée (directement) une surcouche minérale, diélectrique, qui est un oxyde et/ou un nitrure et de préférence qui est une couche mince, par exemple déposée par dépôt physique en phase vapeur, notamment par pulvérisation cathodique magnétron et encore plus préférentiellement selon la même technique de dépôt que la couche mince métallique.

La couche réfléchissante peut être en particulier un empilement de couches minces :
- de préférence inorganiques,
- et/ou de préférence le nombre de couches minces est inférieur à 5, voire inférieur ou égal à 4 voire à 3,
- et/ou de préférence d'épaisseur totale inférieure 300 nm, voire à 200 nm et mieux encore inférieure ou égale à 150 nm.
- empilement trempable (après dépôt de l'empilement, traitement thermique et de préférence trempe).

La couche réfléchissante peut être en particulier un empilement de couches minces comportant dans cet ordre (en s'éloignant de la face avant):
- une éventuelle sous couche mince, notamment diélectrique par exemple un oxyde et/ou un nitrure,
- (directement) la couche mince métallique
- et une surcouche mince, notamment diélectrique, par exemple un oxyde et/ou un nitrure, (directement) sur la couche mince métallique.

La surcouche (mono ou multicouche) et l'éventuelle sous-couche (mono ou multicouche) servent notamment pour ajuster la couleur, améliorer la durabilité et la transformabilité.

Dans un mode de réalisation, la couche réfléchissante est un empilement de couches minces comportant une sous-couche mince de silice, une couche mince métallique de chrome, notamment d'épaisseur supérieure à 8 nm, une surcouche de nitrure de silice et une éventuelle autre surcouche à base de titane éventuellement oxydé, notamment d'épaisseur inférieure à 5 nm. Cette dernière surcouche sert pour la durabilité mécanique et pour la trempabilité.

La couche réfléchissante utilisant le chrome n'est pas altérée par une atmosphère humide, par exemple une pièce d'eau, contrairement à l'argenture qui nécessite l'ajout de la peinture anti corrosion opaque.

La couche réfléchissante utilisant le chrome présente également une résistance aux rayures comparable aux couches pyrolisées, et est résistante au nettoyage, à la désinfection.

La couche réfléchissante utilisant le chrome est trempable (c'est-à-dire apte à subir une trempe thermique). La trempe thermique peut être réalisée sur la première feuille de verre avant le dépôt de cette couche sur la face avant.

La trempe thermique peut être aussi réalisée sur la première feuille de verre déjà revêtue de la couche chrome en face avant (et éventuellement dotée d'une couche à base de fritte de verre adjacente) ou d'une autre couche mince métallique trempable.

La couche réfléchissante utilisant le chrome peut être obtenue par pulvérisation magnétron.

L'empilement à couche métallique chrome par exemple peut être celui utilisé dans le produit MIRASTAR® vendu par la société SAINT-GOBAIN GLASS.

La couche réfléchissante utilisant le chrome n'est pas nécessairement complètement opaque. La couche réfléchissante utilisant le chrome présente typiquement une réflexion lumineuse de l'ordre de 60% et une transmission lumineuse de l'ordre de 3%.

Dans un mode de réalisation, la couche réfléchissante est un empilement de couches minces comportant dans cet ordre (en s'éloignant de la face avant):
- une sous-couche mince choisie parmi une couche de nitrure de silicium, d'oxyde de titane (TiO₂), d'oxyde d'étain (SnO₂), d'oxyde mixte de zinc et d'étain (SnZnOx), de nitrure de silicium et de zirconium (SiZrNx), notamment d'épaisseur de préférence inférieure à 150 nm,
- une couche mince métallique de niobium, ou de nitrure de niobium, notamment d'épaisseur d'au moins 20 nm et de préférence inférieure à 100 nm,
- une surcouche mince, notamment d'épaisseur d'au moins 20 nm et de préférence inférieure à 100 nm, choisie parmi une couche de nitrure de silicium, d'oxyde de titane, d'oxyde d'étain, d'oxyde mixte de zinc et d'étain, de nitrure de silicium et de zirconium.

De préférence la sous-couche et la surcouche sont identiques.

Par ailleurs, la couche réfléchissante, déposée sur la face avant et/ou les moyens diffusants en couche(s), notamment déposée sur la face avant, peuvent être de préférence essentiellement minéral, tout comme la première feuille de verre.

Ainsi la face avant de la première feuille de verre est revêtue de la couche réfléchissante et la première feuille de verre peut être trempée thermiquement avec la couche réfléchissante notamment avec une surcouche minérale, notamment diélectrique, par exemple un oxyde et/ou un nitrure et de préférence mince et éventuellement avec une ou des couches, de préférence essentiellement minérale(s), notamment en émail ou à base de fritte de verre, formant les moyens diffusants, sur la première feuille de verre et/ou éventuellement une couche décorative, de préférence essentiellement minérale, notamment en émail ou à base de fritte de verre, sur la face arrière.

Du fait de la trempe thermique, le panneau miroir et éclairant selon l'invention est plus résistant et sûr, et moins dangereux en cas de casse, notamment lors du transport ou à l'installation. La trempe thermique est en outre moins onéreuse et moins longue à réaliser que la trempe chimique.

Après la trempe, on obtient et/ou on conserve ladite transmission lumineuse inférieure ou égale à 25% et la réflexion lumineuse, mesurée du côté de la face avant, à partir d'au moins 20 %.

Le panneau miroir et éclairant selon l'invention peut être ainsi utilisé dans des conditions de sollicitations mécaniques élevées, par exemple comme cloison, façade, panneau mural et garantit la sécurité des personnes en cas de casse du verre.

Dans un troisième mode de réalisation, la couche réfléchissante est un empilement de couches minces comprenant une couche mince métallique d'acier inoxydable, notamment d'épaisseur supérieure ou égale à 5 nm et inférieure à 50 nm, voire à 20 nm, et d'une surcouche mince de nitrure de titane notamment d'épaisseur supérieure ou égale à 5 nm et inférieure à 150 nm de préférence entre 20 et 30 nm en incluant ces valeurs.

On peut envisager plusieurs configurations pour la ou les zones miroir et la ou les zones éclairantes. On peut envisager de même que l'ajout côté face arrière de couche(s) pour former un éventuel miroir arrière et/ou une ou des zones éclairantes arrière. Toutefois, par la transparence de la première feuille de verre, on peut former déjà une zone éclairante arrière.

Dans une première configuration, la face avant peut comprendre une zone transparente adjacente à la zone miroir et à la zone éclairante (accolée ou espacée de la zone miroir et/ou de la zone éclairante) et de préférence la face arrière comprend également une zone transparente en regard de cette zone transparente de préférence pour une configuration où la face arrière est observable.

Inversement, pour éviter de voir également des défauts du verre dans une zone de transparence du verre, la surface de la zone éclairante et de la zone miroir ou des zones miroir couvre sensiblement toute la face avant de la première feuille de verre, ou au moins la surface dite visible ou fonctionnelle, par exemple en dehors d'une zone marginale avec un profilé support des diodes etc.

Selon une première conception de l'invention, sur une surface dite nue de la face arrière en regard de la zone miroir, la face arrière est exempte d'éléments opaques, réfléchissant ou diffusants, notamment en couche(s), ladite transmission lumineuse (limitée) est mesurée dans cette surface nue.

C'est naturellement la transmission lumineuse (« avant ») de l'ensemble comportant, voire étant constitué :
- de la première feuille de verre, éventuellement liée en face avant à un intercalaire de feuilletage transparent, qui est (lui-même) lié à une éventuelle deuxième feuille de verre transparente, et voire de tout autre élément transparent coté face avant,
- la couche réfléchissante disposée côté face avant de la première feuille de verre, sur la face avant ou éventuellement sur l'intercalaire de feuilletage ou encore sur la deuxième feuille de verre, voire sur tout autre élément transparent coté face avant.

Cette surface nue peut être tout ou partie de la surface en regard de la zone miroir.

Selon une deuxième conception de l'invention, la face arrière comporte, sensiblement sur l'ensemble de la surface en regard de la zone miroir, des éléments opaques, réfléchissants ou diffusants, notamment en couche(s), aptes à influer sur la mesure de ladite transmission lumineuse du panneau.

Aussi, la transmission lumineuse (« avant ») limitée selon l'invention, est celle de l'ensemble comportant, voire étant constitué :
- de la première feuille de verre, éventuellement liée en face avant à un éventuel intercalaire de feuilletage transparent, qui est (lui-même) lié à une éventuelle deuxième feuille de verre transparente, voire de tout autre élément transparent coté face avant,
- de la couche réfléchissante, disposée côté face avant de la première feuille de verre, sur la face avant ou éventuellement sur l'éventuel intercalaire de feuilletage ou encore sur l'éventuelle deuxième feuille de verre, voire sur tout autre élément transparent coté face avant,
ledit ensemble ne comprenant pas lesdits éléments opaques, réfléchissants ou diffusants.

Pour réaliser une telle mesure de transmission lumineuse, on peut par exemple supprimer lesdits éléments opaques, réfléchissants ou diffusants (par abrasion par exemple).

En effet, ce qui importe pour masquer les défauts c'est d'ajuster correctement les propriétés optiques du côté de la face avant.

Dans une configuration où la face arrière est observable, la face arrière peut comprendre une couche réfléchissante, dite autre couche réfléchissante, en regard de la couche réfléchissante, formant miroir arrière et de préférence la première feuille de verre avec l'autre couche réfléchissante présente une réflexion lumineuse RL mesurée du côté de la face arrière sensiblement identique à ladite réflexion lumineuse, pour limiter l'effet double image.

Dans une configuration où la face arrière est masquée (après installation notamment) ou à masquer, ceci pour éviter un fond continu lumineux derrière une zone miroir qui serait visible en face arrière, notamment la face arrière est contre une paroi (opaque), la face arrière (comprend une couche réfléchissante, dite autre couche réfléchissante, en regard des moyens diffusants pour améliorer l'efficacité lumineuse en redirigeant les rayons rétrodiffusés sur les moyens diffusants ou les rayons d'angle supérieur à l'angle de réflexion totale.

Dans une configuration où la face arrière est masquée (après installation notamment) ou à masquer pour éviter un fond continu lumineux derrière un décor visible en face arrière, notamment contre une paroi (opaque), le panneau comprend une couche décorative, sur la face arrière, et en regard de la couche réfléchissante, de largeur inférieure à la largeur de la couche réfléchissante pour préserver la fonction miroir, notamment au moins deux fois moins large, notamment formant un motif, une signalétique, un logo, un texte et la transmission lumineuse TL (mesurée en dehors de ce décor) est d'au moins 1% pour voir cette couche côté face avant lorsque les diodes sont allumées.

De préférence, pour réduire au minimum son épaisseur et simplifier sa fabrication, le panneau est monolithique, la première feuille de verre étant unique et la couche réfléchissante est déposée sur la face avant.

L'épaisseur réduite engendrée par un tel dispositif pour lequel les diodes sont non pas agencées à l'arrière du panneau, mais sur sa tranche, procure une offre d'intégration extrêmement variée dans la vie courante telle que dans les salles de bain ou cabinets de toilette, sur des parois murales, ou selon une association à tout type de mobilier, notamment au niveau de portes à miroirs coulissants ou pivotants d'armoires à glaces ou de placard.

Sa faible épaisseur permet de l'accoler à tous types de surface sans nécessiter la prévision d'un dégagement utile en face arrière pour fournir l'éclairage. Néanmoins, l'épaisseur du panneau pourrait être plus importante afin de répondre par exemple à des exigences purement esthétiques et de design.

Le panneau miroir et éclairant selon l'invention peut être utilisé en intérieur ou à l'extérieur.

Il est donc envisageable de fabriquer un panneau multiple, la première feuille de verre étant solidaire par un intercalaire de feuilletage transparent en matière plastique, d'une deuxième feuille de verre transparente avec deux faces principales, l'une dite de liaison jointe à la face arrière de la première feuille de verre par ladite intercalaire et l'autre dite externe.

Comme intercalaire de feuilletage usuel, on peut citer le polyuréthane (PU) utilisé souple, un thermoplastique sans plastifiant tel que le copolymère éthylène/acétate de vinyle (EVA), le polyvinyl butyral (PVB), un copolymère de polyéthylène et d'acrylate par exemple vendu par la société Dupont sous le nom de Butacite ou vendu par la société Solutia sous le nom de Saflex. Ces plastiques ont par exemple une épaisseur entre 0,2 mm et 1,1 mm, notamment 0,38 et 0,76 mm en incluant ces valeurs.

Comme autres matières plastiques, on peut aussi utiliser des polyoléfines comme du polyéthylène (PE), du polypropylène (PP), du polynaphtalate d'éthylène (PEN) ou du polychlorure de vinyle (PVC) ou des résines ionomères.

La couche réfléchissante peut être déposée sur la face de liaison de l'une des feuilles ou sur l'intercalaire de feuilletage notamment en PVB, en EVA, en PU ou même sur un film plastique notamment mince (d'épaisseur inférieure à 500 microns), notamment tel qu'un polyéthylène téréphtalate (PET) entre l'intercalaire de feuilletage et un deuxième intercalaire de feuilletage identique ou au moins compatible avec ce dernier.

Avec un panneau simple (ou même feuilleté), les moyens diffusants peuvent être formés en face avant par un traitement superficiel de la première feuille de verre du type sablage, attaque acide, dépôt de couche diffusante, ou être dans la masse de la première feuille de verre unique et obtenus par un traitement de type gravure laser.

Avec un panneau feuilleté, la première feuille de verre étant feuilleté à l'aide d'un intercalaire de feuilletage avec une deuxième feuille de verre du coté de la face avant, les moyens diffusants de type couche diffusante peuvent aussi être formés sur la face de liaison de la première feuille de verre ou de la deuxième feuille de verre ou sur l'intercalaire de feuilletage notamment en PVB, EVA, ou PU ou sur un film plastique ajouté, notamment en PET, entre l'intercalaire de feuilletage et un deuxième intercalaire de feuilletage.

On pourra préférer comme moyens diffusants la gravure laser dans l'épaisseur du verre, selon des plans s'étendant parallèlement aux faces principales de la première feuille de verre. En effet ce type de traitement se faisant dans la masse, il n'est pas sensible aux salissures et le verre reste facile à nettoyer.

On peut citer comme verre acidé, le verre Satinovo® de SAINT-GOBAIN GLASS et le verre avec la couche diffusante Smoothlite® de SAINT-GOBAIN GLASS.

Les moyens diffusants sont disposés aux endroits souhaités d'extraction de la lumière. Il est ainsi possible de dessiner le cheminement de la lumière sur la surface du miroir en la diffusant par le biais de surfaces diffusantes aux aires et contours bien définis, selon par exemple des motifs géométriques ou même de texte.

La surface totale des moyens diffusants peut occuper par exemple moins de 50% de la surface totale, voire même 20% ou moins.

La première zone éclairante peut être une bande tout comme la zone miroir.

La première zone éclairante peut être périphérique, notamment le long d'un bord de verre et la zone miroir plus centrale.

La première zone éclairante peut être dans une zone donnée, qui est par exemple une zone centrale, et la zone miroir peut être plus périphérique.

La zone éclairante couvre une fraction de la surface (fonctionnelle, visible) du panneau assez étroite dans le cas d'une grande surface vitrée, la zone miroir a une fonctionnalité donnée primordiale, et notamment est centrale.

La largeur (maximale) de la première zone éclairante, constante ou variable, peut être de préférence inférieure à 200 mm voire inférieure ou égale à 100 mm, notamment pour laisser une surface de zone miroir importante. On peut former de préférence, notamment sur deux bords opposés, deux bandes éclairantes (rectangulaires...), par exemple larges de 5 cm ou plus, par exemple de l'ordre de 10 cm.

On peut aussi former un anneau éclairant (rond, ovale, ellipsoïdale...), par exemple avec un centre correspondant sensiblement au centre du panneau, et/ou de diamètre externe le plus grand possible, et/ou par exemple ayant une largeur (différence entre diamètre externe et diamètre interne) de 5 cm ou plus par exemple de l'ordre de 10 cm, anneau par exemple conjugué avec une zone miroir centrale ronde.

On choisit par exemple de faire une ou des zones éclairantes fonctionnelles (zones visibles, hors zone de points chauds de préférence masquée par le profilé), notamment en périphérie du panneau, d'intensités identiques ou distinctes. Ces zones éclairantes peuvent être pleines ou discontinues, par interruption(s) des moyens diffusants dans l'aire de la zone éclairante en jeu (pour créer des motifs etc).

La première feuille de verre associée aux moyens diffusants peut présenter une transmission lumineuse inférieure à 85% voire inférieure ou égale à 70%, et de préférence supérieure ou égale à 20%, voire supérieure ou égal à 40%.

Le flou dans la zone éclairante peut être de préférence supérieur à 70% voire supérieur ou égal à 85% et mesuré de manière classique avec un appareil dit Hazemeter.

La zone miroir peut être dans une ou des zones limitées. La zone miroir peut par exemple être sous forme de bandes parallèles, d'espacement constant ou éventuellement variable, servant éventuellement pour préserver l'intimité.

La zone miroir couvre partiellement la face avant. La zone miroir peut présenter une aire et des contours variables à façon, être formée de tout type de motifs géométriques ou non. La zone miroir peut former notamment un élément décoratif, un élément de signalisation, un logo, un texte, par exemple en contact avec la zone éclairante et/ou une zone transparente.

La diode peut être encapsulée, c'est-à-dire comprendre une puce semi-conductrice et une enveloppe, par exemple en résine type époxy ou PMMA, encapsulant la puce. Les fonctions de cette enveloppe peuvent être multiples : protection de l'oxydation et de l'humidité, élément diffusant ou de collimation, conversion de longueur d'onde. Les diodes peuvent être noyées dans une matière de protection commune (étanchéité à l'eau, aux poussières ...) qui est de préférence une colle fixant le profilé au panneau.

La diode peut être par exemple une puce semi-conductrice sans lentille de collimation par exemple de taille de l'ordre de la centaine de µm ou du mm ; et éventuellement avec une encapsulation minime par exemple de protection.

De préférence, les diodes peuvent ainsi être de simples puces ou avec une encapsulation à faible volume notamment de type SMD (« Surface Mount Device » en anglais) ou « Chip on Board » plutôt que les diodes classiques (de première génération) volumineuses et de faibles puissances et efficacité lumineuse.

La diode peut être choisie notamment parmi au moins l'une des diodes électroluminescentes suivantes :
- une diode dont la direction principale d'émission est perpendiculaire au support de diodes,
- une diode dont la direction principale d'émission est parallèle par rapport au support de diodes (configuration « side emitting »),

Un verre peut être dépassant pour être porteur de diodes de type « side emitting ». La diode peut être :
- une diode « moyenne puissance », c'est-à-dire supérieure à 0,1 W ou de luminosité supérieure à 8 lumens,
- une diode « haute puissance », c'est-à-dire supérieure ou égale à 1 W ou de luminosité supérieure à 80 lumens.

D'un point de vue dimensionnel, on peut prévoir l'une au moins des caractéristiques suivantes pour les diodes :
- les diodes sont de hauteur inférieure à 1 cm, voire à 5 mm,
- les diodes sont de largeur (diamètre) inférieure à 1 cm,
- les diodes sont identiques et régulièrement espacées les unes des autres,
- le nombre de diodes, sur un support PCB commun notamment, est au moins égal à 10.

Le ou les groupes de diodes peuvent être couplés à des moyens de pilotage permettant d'émettre de la lumière soit en permanence, soit par intermittence, avec différentes intensités, soit d'une couleur donnée, soit de différentes couleurs, notamment en fonction de la quantité de la lumière naturelle.

Et de préférence, pour un éclairage uniforme, les diodes sont choisies avec le même spectre, mono ou polychromatique.

Le cône d'émission peut être symétrique ou asymétrique par rapport au rayon principal. Le cône d'émission peut être par exemple lambertien.

Le demi-angle à mi-hauteur peut être de préférence d'au moins 50°, de préférence 60° voire d'au moins 70°.

Les diodes peuvent être solidaires d'un profilé agencé le long de la tranche et formé d'un matériau conducteur thermiquement, notamment de type métal tel que l'aluminium et est de préférence opaque.

Cela permet une évacuation de la chaleur et évite de dégrader le rendement des diodes, et par conséquent garantit de fournir une meilleure efficacité lumineuse.

Le profilé peut être de toute forme de manière à masquer les diodes : en U, en J, en C, en L, etc...

De préférence le profilé peut former un entourage des diodes, pour leur assurer une meilleure protection. Ainsi, de préférence, on ne pratique pas de trous dans la tranche du verre pour y loger les diodes.

Selon une caractéristique, le profilé s'étend ou est associé à d'autres profilés sur l'ensemble de la périphérie du miroir et forme un cadre périphérique solidaire du pourtour de la première feuille de verre.

Dans une forme particulière, le profilé comporte un retour agencé en butée contre la face avant de la première feuille de verre.

Le profilé est par exemple une plaque typiquement d'épaisseur inférieure ou égale à 3 mm voire entre 0,5 et 1,5 mm en incluant ces valeurs. Un adhésif double-face pour sa fixation au verre est par exemple de l'ordre de 0,4 mm.

Ainsi, dans un mode de réalisation, les diodes (notamment sur leur support PCB) sont disposées dans un profilé, typiquement de maintien et/ou de protection périphérique, comprenant par exemple trois tronçons (d'un seul tenant ou assemblés) :
- deux tronçons principaux, de préférence plans, parallèles aux faces principales du panneau, de préférence en contact avec les faces principales externes,
- et un tronçon latéral (ou fond), en regard du bord de couplage, entre les deux tronçons.

Ce profilé de maintien et/ou de protection peut être apte à pincer le panneau ou encore les deux tronçons principaux sont munis de pattes s'engageant dans des encoches pratiquées sur les faces principales externes du panneau.

Lorsque les diodes sont à face émettrice latérale, ladite face émettrice étant en regard de la tranche de la première feuille de verre, et les diodes sont agencées de préférence sur une partie d'un profilé support qui est parallèle avec la face avant et dans une zone dépassant du bord de la première feuille de verre.

Par ailleurs, au moins un bord de la tranche non couplée aux diodes peut présenter de préférence une couche réfléchissante, notamment métallique.

Les diodes sont de préférence sur un support. Le support de diodes peut être de toute forme, par exemple plane, notamment une barrette par exemple rectiligne de section transversale carrée ou rectangulaire.

Avantageusement, les diodes peuvent être agencées sur un support qui est une carte de circuit imprimé, de préférence métallique, notamment solidarisé à un profilé conducteur thermique de type métal, le support étant de préférence fixé par collage au profilé à l'aide d'une colle ou d'un adhésif double-face thermiquement conducteur.

Le support peut être opaque car il peut être masqué par le profilé choisi opaque.

La carte de circuit imprimé ou PCB (pour « Printed Circuit Board » en anglais) est en matière plastique ou est métallique.

De manière avantageuse, en particulier pour les diodes de moyenne ou forte puissance, le support des diodes peut être rendu solidaire d'un conducteur thermique du type métallique, notamment en aluminium, cuivre ou acier inoxydable, de préférence formé par le profilé à diodes, ledit support intégrant des moyens de dissipation thermique et/ou étant associé à des moyens de dissipation thermique connectés au conducteur thermique.

Les moyens de dissipation thermique, intégrés et/ou associés au support des diodes peuvent être constitués par le matériau constitutif du support, du type métallique, ou par des surfaces métalliques intégrées au support, et éventuellement par des moyens de solidarisation du support audit conducteur thermique, notamment par le profilé à diodes, qui sont thermiquement conducteurs et faits d'un matériau isolant électrique, du type colle ou ruban adhésif thermiquement conducteur.

De préférence le support (PCB) de diodes est métallique et les diodes sont soudées sur des pistes qui sont isolées électriquement du matériau métallique. Le matériau métallique du support étant conducteur thermique, le support peut être directement plaqué contre un conducteur thermique pour obtenir la dissipation thermique.

La fixation du support (PCB) au profilé peut être réalisée par exemple par clipsage et/ou vissage. On peut intercaler un conducteur thermique (type graisse thermique, scotch thermique et/ou colle thermique ...) pour obtenir une meilleure dissipation thermique, et ce pour une meilleure efficacité lumineuse et pour la pérennité des diodes.

Le ruban adhésif présente l'avantage de fournir une épaisseur calibrée, permettant au support (PCB) d'être parfaitement plan et d'assurer aux diodes d'être toutes à égale distance du profilé. De plus, le ruban adhésif permet sa fixation préalable au support.

Un assemblage du support (PCB) des diodes via un adhésif double-face ou une colle durcissable (qui ne fournit pas une fixation immédiate) est préféré car il permet un positionnement relatif du support de faibles dimensions sur le profilé.

Avec un support de diodes (PCB) plastique, les diodes sont soudées sur des surfaces dissipatrices de chaleur (dites « thermal pad » en anglais) rapportées sur les deux faces opposées du support et au travers de son épaisseur. La fixation est réalisée nécessairement par un matériau isolant électrique de solidarisation conducteur thermique associé aux surfaces de dissipation thermiques. Le matériau de solidarisation conducteur thermique est par exemple de la colle ou du ruban adhésif double-face thermiquement conducteur, déjà cités.

En variante, la ou les supports PCB sont fixés par collage d'un adhésif thermiquement conducteur double-face sur une pièce formant interface plane, avantageusement métallique, elle-même fixée par collage sur le profilé tel qu'avec une colle durcissable pour ne pas fournir une solidarisation immédiate. Une telle fixation permet un positionnement relatif du support de faibles dimensions de manière précise sur la partie du profilé parallèle au verre de façade (pour des leds à émission latérale), en particulier dans le cas d'un profilé semi-fermé présentant un retour pour former un entourage.

La transmission lumineuse de la première feuille de verre de l'invention peut être supérieure ou égale à 80%, voire à 85% ou 90%.

La première feuille de verre peut être en verre minéral clair voire extra-clair. Pour le verre extra-clair; on peut se référer à la demande WO04/025334 pour la composition d'un verre extra-clair. On peut choisir en particulier un verre silicosodocalcique avec moins de 0,05% de Fe III ou de Fe₂O₃. On peut choisir par exemple le verre Diamant@ ou Diamant solaire® de SAINT-GOBAIN GLASS, le verre Albarino® de SAINT-GOBAIN GLASS (texturé ou lisse), le verre OptiWHITE® de Pilkington, le verre B270® de Schott.

En outre, on préfère un verre minéral pour ses multiples atouts :
- le verre présentant une bonne résistance à la chaleur, il peut être proche des diodes malgré le fait qu'elles constituent des points chauds,
- le verre est mécaniquement résistant de sorte qu'il présente une facilité de nettoyage et ne se raye pas, ce qui présente un intérêt particulier pour les panneaux installés dans des lieux imposant une hygiène stricte,
- le verre répond aux besoins des normes de sécurité au feu.

Il peut s'agir à titre d'exemple, selon notamment le rendu esthétique ou l'effet optique souhaité et/ou la destination du panneau décoratif et éclairant de :
- verre de composition standard, tel que le verre Planilux® de la société SAINT-GOBAIN GLASS, de coloration légèrement verte,
- verre extra-clair sans coloration (neutre) tel que le verre Diamant® ou Diamant solaire® de la société SAINT-GOBAIN GLASS,
- verre imprimé de type pyramidal, tel que le verre Albarino® de la société SAINT-GOBAIN GLASS, des reliefs en forme de pyramides étant établis sur la face externe du panneau en regard de l'environnement extérieur,
- verre trempé présentant une meilleure résistance mécanique.

La première feuille de verre peut être plane ou bombée, notamment à des fins décoratives ou d'intégration.

Par ailleurs, le panneau selon l'invention peut aussi recevoir un système chauffant électrique pour enlever la buée qui se forme sur la face avant du miroir.

Il peut notamment comporter un système chauffant électrique du côté de la face arrière et au moins en regard de la zone miroir, face arrière de préférence masquée, système notamment choisi parmi :
- une couche (mince) chauffante électrique, notamment transparente, par exemple en oxyde d'étain dopé fluor, déposée par exemple par pyrolyse sous forme vapeur (CVD), et porteuse de deux bandes en pâte d'argent et sérigraphiées formant distributeurs de courant, de préférence le long des bords de la première feuille de verre 1,
- un réseau chauffant à base d'un émail conducteur notamment à l'argent,
- un film chauffant autoadhésif par exemple collé sur un émail opaque formant un fond uniforme.

Les miroirs chauffants électriques peuvent dégager suffisamment de chaleur, typiquement jusqu'à 1000 W/m², pour donner une température confortable à une pièce. Ils peuvent former par exemple un radiateur d'appoint notamment mural. Le miroir chauffant électrique est par exemple destiné à garnir une paroi, un mur. Ce miroir convient tout particulièrement dans un environnement humide, tel que par exemple une salle de bain ou une piscine, dans lequel un léger chauffage est prévu pour enlever la buée qui se forme sur la face avant du miroir (face orientée vers la pièce).

L'éclairage de la zone éclairante peut être décoratif, architectural, de signalisation. Le panneau miroir et éclairant peut être destiné en particulier :
- au bâtiment notamment un plafonnier, une dalle murale, une cloison,
- à un véhicule de transport notamment de transport en commun, train, métro, tramway, bus ou de véhicule aquatique ou aérien (avion),
- à un panneau de mobilier urbain, comme un partie d'abribus, de balustrade, de présentoir, d'une vitrine,
- à un élément d'étagère,
- à un panneau d'ameublement intérieur, comme une paroi de salle de bain, d'un meuble, une applique murale.

Il peut former en outre, comme déjà vu, un miroir chauffant électrique et éclairant, notamment un radiateur, un radiateur sèche-serviette, une (partie chauffante de) vitrine de magasin, une (partie chauffante) de porte vitrée, notamment de salle bain.

L'invention porte en outre sur le procédé de fabrication du panneau miroir et éclairant à diodes tel que défini précédemment qui comprend après dépôt(s) de couche(s) sur la face avant de la première feuille pour former la couche réfléchissante, notamment une surcouche mince minérale, notamment diélectrique, par exemple un oxyde et/ou un nitrure, un traitement thermique à au moins 450°C, voire à au moins 500°C et même au moins 600°C suivi d'une opération de trempe (thermique).

De préférence, il comprend le dépôt d'une couche à base de liant en fritte de verre, pour former une couche décor ou une couche diffusante formant les moyens diffusants. Le traitement thermique fait (aussi) fondre la fritte de verre pour la formation des moyens diffusants.

De préférence, en outre :
- le dépôt de couche(s) (minces) pour former la couche réfléchissante, est principalement voire exclusivement par dépôt physique en phase vapeur, notamment principalement voire exclusivement par pulvérisation cathodique magnétron
- et/ou le dépôt de couche(s) pour former la couche réfléchissante est partiel c'est à dire uniquement dans la zone destinée à former la zone miroir (par masquage par exemple) et par exemple précède le dépôt d'une couche à base de liant en fritte de verre formant les moyens diffusants.

D'autres détails et caractéristiques avantageuses de l'invention apparaissent à la lecture des exemples de panneaux miroir et éclairant à diodes selon l'invention illustrés par les figures suivantes :
- La figure 1a représente une vue en coupe transversale du panneau miroir et éclairant à diodes électroluminescentes dans un premier mode de réalisation de l'invention,
- La figure 1b est une vue de dessus côté face avant du panneau miroir et éclairant de la figure 1a,
- La figure 2a représente une vue en coupe transversale du panneau miroir et éclairant à diodes électroluminescentes dans un deuxième mode de réalisation de l'invention,
- La figure 2b est une vue de dessus côté face avant du panneau miroir et éclairant de la figure 2a,
- La figure 3a représente une vue en coupe transversale du panneau miroir et éclairant à diodes électroluminescentes dans un troisième mode de réalisation de l'invention,
- La figure 3b est une vue de dessus côté face avant du panneau miroir et éclairant de la figure 3a,
- La figure 3c est une vue de dessous côté face arrière du panneau miroir et éclairant de la figure 3a,
- La figure 4a représente une vue en coupe transversale du panneau miroir et éclairant à diodes électroluminescentes dans un quatrième mode de réalisation de l'invention,
- La figure 4b est une vue de dessus côté face avant du panneau miroir et éclairant de la figure 4a,
- La figure 5 représente une vue en coupe transversale du panneau miroir et éclairant à diodes électroluminescentes dans un cinquième mode de réalisation de l'invention,
- La figure 6 représente une vue en coupe transversale du panneau miroir et éclairant à diodes électroluminescentes dans un cinquième mode de réalisation de l'invention.

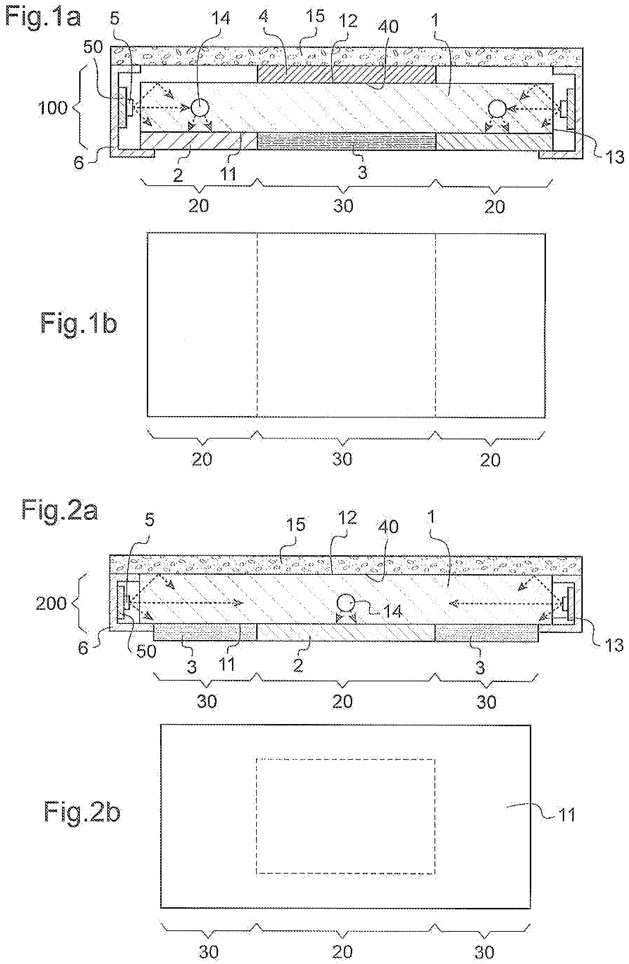

Les figures sont schématiques et ne sont pas à l'échelle pour en faciliter la lecture. La figure 1a représente une vue en coupe transversale du panneau miroir et éclairant à diodes électroluminescentes dans un premier mode de réalisation de l'invention;
Ce panneau 100 comporte :
- une première feuille 1 transparente en verre minéral, avec des faces principales opposée respectivement dites face arrière 12 et face avant 11, et une tranche 13,
- une couche réfléchissante 2 pour assurer la fonction de miroir via la face avant 11, dans deux premières zones périphériques dites zones miroir 20,
- des diodes électroluminescentes 5, fournissant la fonction d'éclairage,
- des moyens de diffusion 3 de la lumière sortant par la face avant 11, dit moyens diffusants, formant ainsi une deuxième zone, dite zone éclairante 20 centrale et contigüe adjacente aux zones miroirs.

La première feuille de verre 1 transparente est par exemple issue d'un verre dit clair tel que le verre PLANILUX® commercialisé par la société SAINT-GOBAIN GLASS, ou préférablement d'un verre dit extra-clair sous la dénomination DIAMANT® commercialisé par la société SAINT-GOBAIN GLASS.

La face avant 11 est en vis-à-vis de l'observateur se regardant dans le miroir. La face arrière 12 est masquée par un mur.

La disposition des diodes 5 en bord de la première feuille de verre produit des rayons s'introduisant via la tranche 13 de la première feuille de verre 1, tels que schématiquement représentés par les flèches.

Les diodes 5 sont disposées à l'intérieur d'un profilé 6 agencé latéralement à la première feuille de verre. Les diodes sont ainsi couplées optiquement à la tranche 13 de la première feuille de verre pour un guidage dans l'épaisseur de la première feuille de verre de la lumière issue des diodes avant une extraction de la lumière des diodes par les moyens diffusants 3.

Par exemple, la face avant 11 est pourvue localement des moyens diffusants 3 servant à extraire la lumière vers l'extérieur de la première feuille de verre.

Ces moyens sont par exemple obtenus par un traitement de surface du verre du type sablage, attaque acide, ou par une couche diffusante notamment par dépôt de fritte de verre diffusante (par exemple ajout d'éléments diffusants par exemple des particules notamment minérales), ou pâte diffusante, etc...

En variante, on réalise par un traitement dans la masse du verre 1 de type gravure laser.

Les moyens diffusants 3, ici sous forme d'une bande centrale 30, sont disposés aux endroits souhaités d'extraction de la lumière.

La combinaison d'un éclairage par des diodes 5 positionnées sur la tranche 13, et de moyens diffusants 3 peut en outre permettre d'obtenir un éclairage très éclairant sans éblouir. La luminance normale dans chaque zone éclairante fonctionnelle, visible (hors zone marginale de points chauds) est de préférence inférieure à 3000 cd/m², encore plus préférentiellement inférieure ou égale à 2000 cd/m².

La couche réfléchissante 2 est une couche disposée du côté de la face avant, ici directement sur la face avant 11, et forme deux bandes de part et d'autre des moyens diffusants 3, comme montré en figure 1 b.

La première feuille de verre 1 revêtue de la couche réfléchissante 2 présente une transmission lumineuse TL inférieure ou égale à 25%, voire inférieure ou égale à 10% pour éviter de voir les défauts lorsque les diodes sont allumées et une réflexion lumineuse RL côté face avant 11 à partir d'au moins 20 %, voire de 35% voire même de 50% pour assurer la fonction de miroir au mieux.

On choisit ici un verre avec une multicouche à base de chrome tel que le produit SGG MIRASTAR® de la société SAINT GOBAIN GLASS. La couche est déposée par magnétron.

Il s'agit d'un empilement de couches minces comportant :
- une sous-couche mince de silice, de 30 nm environ d'épaisseur,
- une couche mince métallique de chrome, de 19 nm environ d'épaisseur,
- une surcouche de nitrure de silice, de 5 nm environ d'épaisseur,
- et une autre surcouche à base de titane oxydé, de 1 nm environ.

Le produit SGG MIRASTAR® présente une TL de l'ordre de 3% et une RL de l'ordre de 60%.

Avec le verre SGG MIRASTAR®, il est possible de sérigraphier une couche à base de fritte de verre diffusante sur la face avant 11 -par exemple pour former la couche diffusante 3-, de chauffer par exemple à 600°C l'ensemble (formant la couche 3 de type émail, en fritte de verre fondue) et de tremper thermiquement l'ensemble, à l'inverse d'un miroir à l'argenture standard.

Par ailleurs, pour améliorer l'efficacité lumineuse, on peut déposer partiellement une autre couche réfléchissante 4, en face arrière 12 en regard de la couche diffusante 3, couche par exemple identique à la couche du SGG MIRASTAR®.

Le profilé 6 est constitué d'un matériau opaque et conducteur de la chaleur pour assurer vers l'extérieur une évacuation des calories générées par les diodes lors de leur fonctionnement. A titre d'exemple, le profilé est en aluminium et obtenu sous forme extrudée. Pour fournir l'esthétique souhaitée au miroir, le profilé 6 peut être laqué, peint, décoré, anodisé.

Le profilé 6 s'étend partiellement ou pourrait cheminer sur toute la périphérie de la première feuille de verre 1 à la manière d'un encadrement. Il peut être unique et mis en forme de manière appropriée pour suivre le contour de la première feuille de verre, en particulier lorsque le panneau présente un contour courbe. En variante, plusieurs profilés peuvent être fournis pour correspondre à chacun des côtés de la première feuille de verre et auxquels ils sont associés tout en étant aboutés entre eux au niveau des coins de la première feuille de verre.

Les diodes 5 sont par exemple disposées sur une carte de circuit imprimé PCB sous forme d'une barrette 50 métallique fixée sur le fond du profilé 6 métallique de section transversale en U, de préférence au moyen d'une colle ou d'un adhésif double-face thermiquement conducteur, tel que par exemple le produit 3M® de référence 8940. Cette colle ou cet adhésif participe à la dissipation des calories vers le profilé qui à son tour, grâce à son matériau conducteur, les évacue vers l'extérieur, les calories étant transmises au niveau des soudures des diodes sur le support 50 lors de leur fonctionnement. L'épaisseur d'un adhésif double-face est par exemple de 0,4 mm.

Avec ce concept, le panneau 100 ainsi réalisé présente une épaisseur relativement mince peu différente de la première feuille de verre correspondante, par exemple de l'ordre de 6 mm, voire même de 4 mm.

Selon l'éclairage souhaité, les diodes sont réparties régulièrement ou non le long du profilé. De plus, lorsque le profilé 6 forme un encadrement pour assurer un ensemble esthétique harmonieux, les diodes peuvent en particulier n'être réparties que ponctuellement et non sur la totalité du périmètre du panneau 100.

Ce panneau 100 peut par exemple en outre comprendre un système chauffant électrique (non montré) du côté de la face arrière et au moins en regard de la zone miroir, système notamment choisi parmi :
- une couche mince chauffante électrique, notamment transparente, par exemple en oxyde d'étain dopé fluor,
- un réseau chauffant à base d'un émail conducteur notamment à l'argent,
- un film chauffant autoadhésif.

En variante, il est envisageable que (la surface de) la zone miroir soit discontinue et/ou que (la surface de la) zone éclairante soit discontinue, par exemple en insérant, dans la zone miroir (devenant donc discontinue), des motifs éclairants (voire en gardant la transparence du panneau par une absence de couche réfléchissante) et/ou en insérant, dans la zone éclairante (devenant donc discontinue), des motifs miroir (voire en gardant la transparence du panneau par une absence des moyens diffusants).

En outre, la zone miroir peut présenter diverses formes, des contours plus ou moins complexes, par exemple pour former un dessin (paysage etc), des motifs notamment géométriques, de la signalétique, un logo...

La figure 2a représente une vue en coupe transversale du panneau miroir et éclairant à diodes électroluminescentes 200 dans un deuxième mode de réalisation de l'invention. Et la figure 2b est une vue de dessus côté face avant du panneau miroir et éclairant de la figure 2a.

Ce panneau 200 diffère du panneau 100 en ce que :
- la zone éclairante 30 est périphérique et forme un cadre (cf. figure 2b),
- la zone miroir est unique et centrale 20 et la couche réfléchissante 2 est un empilement de couches minces alternatif,
- le profilé porteur d'un autre groupe de diodes sur support PCB sur un bord opposé au bord de couplage du premier groupe de diodes,
- l'absence (optionnelle) d'une couche réfléchissante en face arrière.

L'empilement de couches minces de la couche réfléchissante 2 est par exemple l'empilement trempable suivant :
- une sous couche mince de nitrure de silicium,
- une couche mince métallique à base de niobium, ou de nitrure de niobium,
- une surcouche mince de nitrure de silicium.

On choisit par exemple les couches des produits ST108, ST120, STB120 de SAINT GOBAIN GLASS décrits dans les tableaux 1 et 2 ci après.

**Tableau 1**

| Couche | Sous couche Si₃N₄ | Couche métallique Nb | Couche métallique NbN | Surcouche Si₃N₄ |
|---|---|---|---|---|
| Produit | Epaisseur (nm) | Epaisseur (nm) | Epaisseur (nm) | Epaisseur (nm) |
| ST 108 | 10 | 35 | - | 30 |
| ST 120 | 10 | - | 25 | 30 |
| STB 120 | 80 | - | 23 | 28 |

**Tableau 2**

| Produit | TL en % | RL en % |
|---|---|---|
| ST 108 | 8 | 37,5 |
| ST 120 | 20 | 27 |
| STB 120 | 21,5 | 28,5 |

L'empilement de couches minces de la couche réfléchissante 2 est par exemple en variante :
- une couche mince métallique en acier inoxydable, de 5 à 15 nm,
- une surcouche mince de nitrure de silicium, de 20 à 30 nm.

On choisit par exemple les couches des produits SS108, SS114 et SS120 de SAINT GOBAIN GLASS décrits dans le tableau 3 ci après.

**Tableau 3**

| Produit | TL en % | RL en % |
|---|---|---|
| SS 108 | 7 | 42 |
| SS 114 | 13 | 32 |
| SS 120 | 18 | 24 |

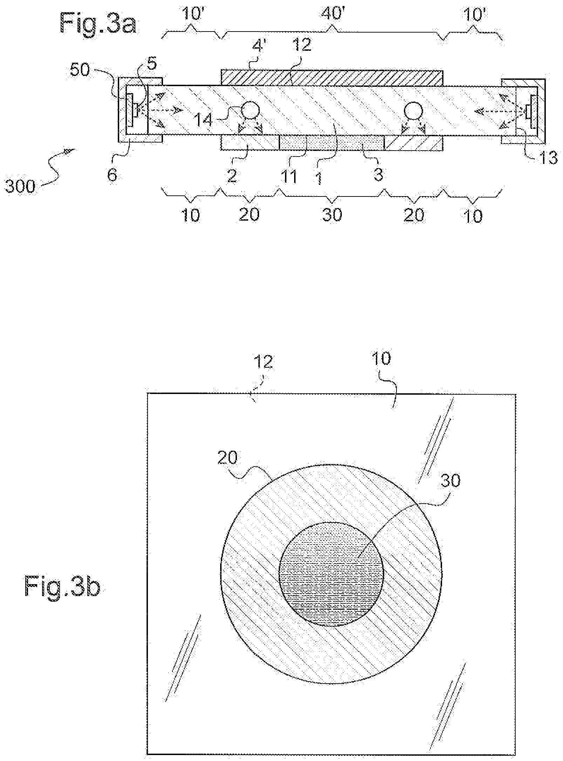

La figure 3a représente une vue en coupe transversale du panneau miroir et éclairant à diodes électroluminescentes dans un troisième mode de réalisation de l'invention.

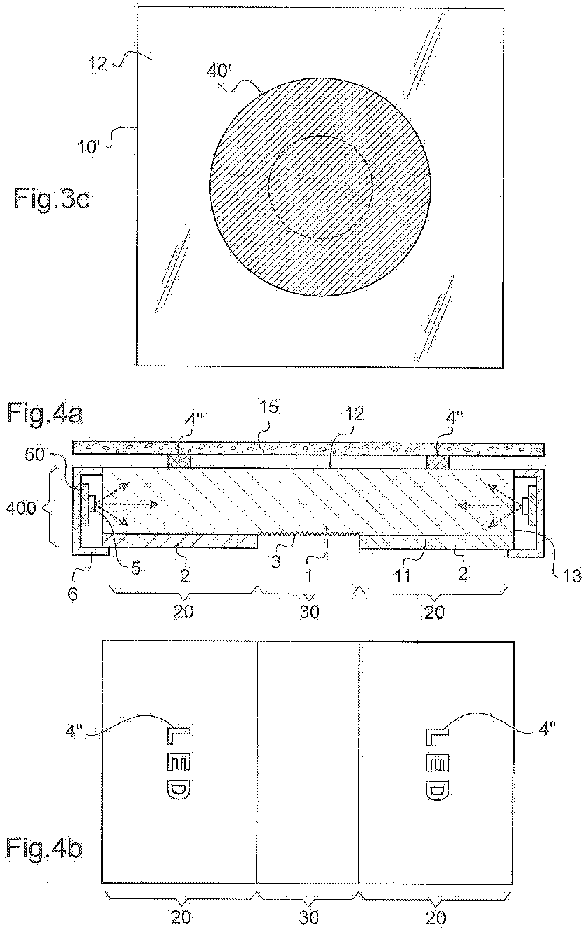

Ce panneau 300 diffère du panneau 100 en ce que :
- la face arrière 12 est visible,
- la zone éclairante centrale 30 est en rond et la zone miroir en anneau (cf. aussi figure 3b), et la couche réfléchissante arrière 4' est une couche identique à la couche 2, couche du produit MIRASTAR®, qui est en rond 40', couvrant la zone cumulée miroir 20 et éclairante 30 (cf. aussi figure 3c),
- la zone miroir périphérique laisse une zone encore plus périphérique transparente 10 (cf. aussi figures 3b et 3c) en regard d'une zone transparente 10' en face arrière 12.

En variante non montrée, la zone centrale devient la zone miroir et la zone périphérique devient la zone éclairante.

La figure 4a représente une vue en coupe transversale du panneau miroir et éclairant à diodes électroluminescentes 400 dans un quatrième mode de réalisation de l'invention. La figure 4b est une vue de dessus côté face avant du panneau miroir et éclairant de la figure 4a.

Ce panneau 400 diffère du panneau 100 d'abord en ce qu'on rajoute des motifs fins décoratifs 4" diffusants en face arrière 12, côté cloison 15 en regard de la zone miroir 20. Par exemple il s'agit d'une couche formée à base de fritte de verre, sérigraphiée.

Pour un observateur placé côté face avant 11, les motifs diffusants (formant des lettres LED par exemple comme montré en figure 4b) en face 12 ne seront donc pas visibles à l'état off (diodes éteintes) mais ils deviennent visibles à l'état on (diodes allumées).

Ce panneau 400 diffère du panneau 100 ensuite par :
- l'ajout d'un autre groupe de diodes sur support PCB sur un bord opposé au bord de couplage du premier groupe de diodes 5 ;
- l'absence (optionnelle) d'une couche réfléchissante en face arrière en regard de des moyens diffusants 3 ici faits par sablage de la face avant 12.

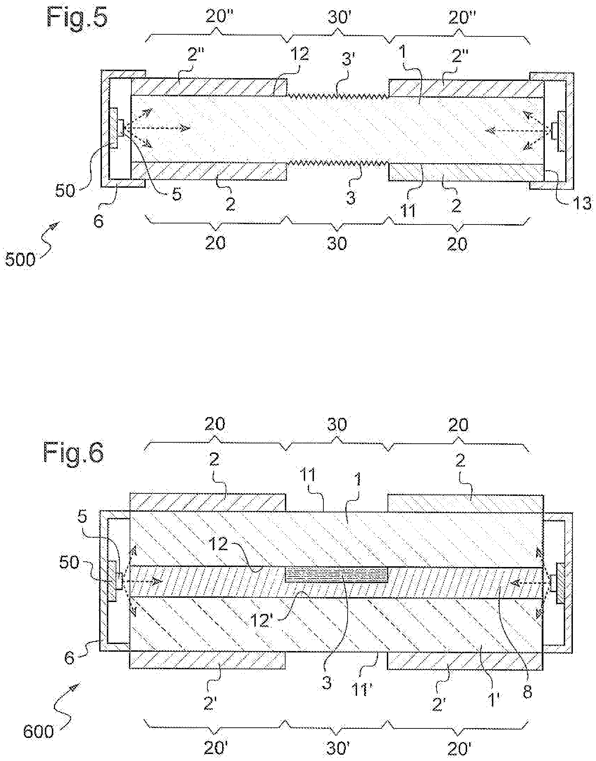

La figure 5 représente une vue en coupe transversale du panneau miroir et éclairant à diodes électroluminescentes 500 dans un cinquième mode de réalisation de l'invention.

Ce panneau 500 diffère du panneau 100 en ce que la face arrière 12 est observable, on rajoute en face arrière 12 des moyens diffusants 3' et une couche réfléchissante 2" en regard de la couche 2 formant miroir arrière 20" par exemple de même nature que la couche 2.

On ajoute aussi un autre groupe de diodes sur support PCB sur un bord opposé au bord de couplage du premier groupe de diodes.

La figure 6 représente une vue en coupe transversale du panneau miroir et éclairant à diodes électroluminescentes 600 dans un sixième mode de réalisation de l'invention.

Ce panneau 600 diffère du panneau 100 monolithique en ce qu'il s'agit d'un vitrage feuilleté, la première feuille 1 étant feuilletée avec un intercalaire de feuilletage polymérique 8 transparente (PVB, EVA ou PU par exemple) à une deuxième feuille de verre transparente 1' avec une face la plus externe visible 11'.

Les moyens diffusants 3 en couche sont par exemple en face arrière 12 de la première feuille 1 par exemple un émail créant ainsi également une zone éclairante 30' sur la face la plus externe 11' de la deuxième feuille 1'. On rajoute aussi sur la face la plus externe 11' de la deuxième feuille 1' une couche réfléchissante 2' en regard de la couche 2 formant miroir arrière 20' par exemple de même nature la couche 2.

Le profilé 6 est aussi porteur d'un autre groupe de diodes sur support PCB sur un bord opposé au bord de couplage du premier groupe de diodes.

Le guidage se fait ici sur toute l'épaisseur du vitrage feuilleté et les diodes sont de préférence au centre du chant du panneau 600.

## Revendications

1. Panneau miroir et éclairant à diodes électroluminescentes (100, 200, 300, 400, 500, 600) comportant :
- une première feuille transparente de verre (1), avec deux faces principales (11, 12), respectivement dites face avant (11) et face arrière (12), et une tranche (13),
- une couche réfléchissante (2) pour assurer la fonction de miroir via la face avant (11), dans une première zone dite zone miroir,
- des diodes électroluminescentes (5), fournissant la fonction d'éclairage,
- des moyens de diffusion (3) de la lumière sortant par la face avant, dits moyens diffusants, formant ainsi une deuxième zone, dite zone éclairante (30), adjacente à la zone miroir,
**caractérisé en ce que** les diodes sont couplées optiquement à la tranche (13) de la première feuille de verre pour un guidage dans l'épaisseur de la première feuille de verre (1) de la lumière émise par les diodes avant une extraction de la lumière des diodes par les moyens diffusants (3), la couche réfléchissante (2) étant une couche disposée du côté de la face avant, absente de la zone éclairante (30), la couche réfléchissante comprenant une couche mince métallique, **caractérisé en ce que** cette couche mince métallique est choisie parmi une couche de chrome, de niobium, de nitrure de niobium, ou d'acier et **en ce que** dans la zone miroir (20), la première feuille de verre (1) avec la couche réfléchissante (2) présente une transmission lumineuse inférieure ou égale à 25% et une réflexion lumineuse, mesurée du côté de la face avant (11), à partir d'au moins 20 % et **en ce que** au-dessus de la couche mince métallique est disposée une surcouche minérale, diélectrique, qui est un oxyde et/ou un nitrure.

2. Panneau miroir et éclairant à diodes électroluminescentes (100, 200, 300, 400, 500, 600) selon la revendication 1 **caractérisé en ce que** la couche mince métallique est une couche de chrome.

3. Panneau miroir et éclairant à diodes électroluminescentes (100, 200, 300, 400, 500, 600) selon la revendication 1 ou 2 **caractérisé en ce que** la surcouche est mince.

4. Panneau miroir et éclairant à diodes électroluminescentes (100, 200, 300, 400, 500, 600) selon la revendication 1 à 3 **caractérisé en ce que** la couche réfléchissante (2) est un empilement de couches minces comportant une éventuelle sous couche mince, notamment diélectrique, par exemple un oxyde et/ou un nitrure, la couche mince métallique et la surcouche mince, notamment diélectrique, par exemple un oxyde et/ou un nitrure.

5. Panneau miroir et éclairant à diodes électroluminescentes (100, 300, 400, 500, 600) selon l'une des revendications 1 à 3 **caractérisé en ce que** la couche réfléchissante (2) est un empilement de couches minces comportant une sous couche mince de silice, une couche mince métallique de chrome, la surcouche de nitrure de silice et une éventuelle autre surcouche à base de titane éventuellement oxydé.

6. Panneau miroir et éclairant à diodes électroluminescentes (200) selon l'une des revendications 1 à 3 **caractérisé en ce que** la couche réfléchissante (2) est un empilement de couches minces comportant :
- une sous-couche mince choisie parmi une couche de nitrure de silicium, d'oxyde de titane, d'oxyde d'étain, d'oxyde mixte de zinc et d'étain, de nitrure de silicium et de zirconium,
- une couche mince métallique de niobium ou de nitrure de niobium,
- la surcouche mince choisie parmi une couche de nitrure de silicium, d'oxyde de titane, d'oxyde d'étain, d'oxyde mixte de zinc et d'étain, de nitrure de silicium et de zirconium,
et **en ce que** de préférence la sous couche et la surcouche sont identiques.

7. Panneau miroir et éclairant à diodes électroluminescentes (100, 200, 300, 400, 500, 600) selon l'une des revendications 1 à 6 **caractérisé en ce que** la face avant (11) de la première feuille de verre est revêtue de la couche réfléchissante (2), et la première feuille de verre est trempée thermiquement avec ladite couche réfléchissante et éventuellement avec une ou des couches (3), notamment en émail ou à base de fritte de verre, formant les moyens diffusants sur la première feuille de verre et/ou éventuellement avec une couche décorative (4"), notamment en émail ou à base de fritte de verre, sur la face arrière (12) de la première feuille de verre.

8. Panneau miroir et éclairant à diodes électroluminescentes (200) selon l'une des revendications 1 à 3 **caractérisé en ce que** la couche réfléchissante (2) est un empilement de couches minces comprenant une couche mince métallique d'acier et la surcouche mince de nitrure de titane.

9. Panneau miroir et éclairant à diodes électroluminescentes (100, 200, 400, 500, 600) selon l'une quelconque des revendications précédentes **caractérisé en ce que** la surface de la zone éclairante (30) et de la zone miroir (20) ou des zones miroir couvre sensiblement toute la face avant (11) de la première feuille de verre (1).

10. Panneau miroir et éclairant à diodes électroluminescentes (300) selon l'une quelconque des revendications 1 à 8 **caractérisé en ce que** la face avant (11) comprend une zone transparente adjacente (10) à la zone miroir (20) et à la zone éclairante (30) et de préférence la face arrière (12) comprend également une zone transparente (10') en regard de ladite zone transparente (10), de préférence pour une configuration où la face arrière (12) est observable.

11. Panneau miroir et éclairant à diodes électroluminescentes (100, 200, 400) selon l'une quelconque des revendications précédentes, **caractérisé en ce que** sur une surface dite nue de la face arrière (12) en regard de la zone miroir (20), la face arrière est exempte d'éléments opaques, réfléchissant ou diffusants, notamment en couche(s), et ladite transmission lumineuse est mesurée dans cette surface nue.

12. Panneau miroir et éclairant à diodes électroluminescentes (300, 400, 600) selon l'une quelconque des revendications 1 à 10, **caractérisé en ce que**, la face arrière (12) comporte, sur toute la surface en regard de la zone miroir (20), des éléments (2', 2", 4') opaques, réfléchissants ou diffusants, notamment en couche(s), et ladite transmission lumineuse est celle de l'ensemble comportant la première feuille de verre, la couche réfléchissante et ne comprenant pas lesdits éléments (2', 2", 4') opaques, réfléchissants ou diffusants.

13. Panneau miroir et éclairant à diodes électroluminescentes (300, 500, 600) selon l'une quelconque des revendications précédentes, **caractérisé en ce que**, en configuration où la face arrière (12) est observable, la face arrière (12) comprend une couche réfléchissante (2', 2", 4'), dite autre couche réfléchissante, en regard de la couche réfléchissante (2), formant miroir arrière (20', 20",40',) et de préférence la première feuille de verre avec l'autre couche réfléchissante présente une réflexion lumineuse mesurée du côté de la face arrière sensiblement identique à ladite réflexion lumineuse.

14. Panneau miroir et éclairant à diodes électroluminescentes (100) selon l'une quelconque des revendications 1 à 11, **caractérisé en ce que**, en configuration où la face arrière (12) est masquée ou à masquer, notamment est contre une paroi (15), la face arrière (12) comprend une couche réfléchissante, dite autre couche réfléchissante (4), en regard des moyens diffusants (3).

15. Panneau miroir et éclairant à diodes électroluminescentes (400) selon l'une quelconque des revendications précédentes, **caractérisé en ce que**, en configuration où la face arrière (12) est masquée ou à masquer, notamment est contre une paroi (15), le panneau comprend une couche décorative (4") sur la face arrière et en regard de la couche réfléchissante (2), de largeur inférieure à la largeur de la couche réfléchissante, notamment formant un motif, une signalétique, un logo, un texte, et ladite transmission lumineuse est d'au moins 1%.

16. Panneau miroir et éclairant à diodes électroluminescentes (100, 200, 300, 400, 500) selon l'une quelconque des revendications précédentes, **caractérisé en ce que** le panneau est monolithique, la première feuille de verre (1) étant unique et la couche réfléchissante (2) est déposée sur la face avant (11).

17. Panneau miroir et éclairant à diodes électroluminescentes (600) selon l'une quelconque des revendications 1 à 15, **caractérisé en ce que** le panneau est multiple, la première feuille de verre (1) est solidaire, par un intercalaire de feuilletage transparent en matière plastique, d'une deuxième feuille de verre transparente (1') avec deux faces principales (11' ,12'), l'une dite de liaison car jointe à la face arrière de la première feuille de verre par ladite intercalaire et l'autre dite externe.

18. Panneau miroir et éclairant à diodes électroluminescentes (100) selon l'une quelconque des revendications précédentes **caractérisé en ce qu'**il comporte un système chauffant électrique du côté de la face arrière et au moins en regard de la zone miroir, système notamment choisi parmi :
- une couche mince chauffante électrique, notamment transparente, par exemple en oxyde d'étain dopé fluor,
- un réseau chauffant à base d'un émail conducteur notamment à l'argent,
- un film chauffant autoadhésif.

19. Procédé de fabrication du panneau miroir et éclairant à diodes électroluminescentes (100, 200, 300, 400, 500, 600) selon l'une quelconque des revendications précédentes de panneau **caractérisé en ce qu'**il comprend après dépôt(s) de couche(s) sur la face avant (11) de la première feuille (1) pour former la couche réfléchissante (2) un traitement thermique à au moins 450°C suivi d'une opération de trempe.

20. Procédé de fabrication du panneau miroir et éclairant à diodes électroluminescentes (100, 200, 300, 500, 600) selon la revendication précédente **caractérisé en ce qu'**il comprend le dépôt d'une couche à base de liant en fritte de verre, pour former une couche décor (4") ou une couche diffusante formant les moyens diffusants (3) et **en ce que** le traitement thermique fait fondre la fritte de verre pour la formation des moyens diffusants (3)

21. Procédé de fabrication du panneau miroir et éclairant à diodes électroluminescentes (100, 200, 300, 500, 600) selon la revendication 19 ou 20 **caractérisé en ce que** le dépôt de couche(s) pour former la couche réfléchissante (2), est principalement voire exclusivement par dépôt physique en phase vapeur, notamment principalement voire exclusivement par pulvérisation cathodique

22. Procédé de fabrication du panneau miroir et éclairant à diodes électroluminescentes (100, 200, 300, 500, 600) selon l'une des revendications 19 à 21 **caractérisé en ce que** le dépôt de couche(s) pour former la couche réfléchissante (2) est partiel c'est à dire uniquement dans la zone destinée à former la zone miroir.

## Patentansprüche

1. Leuchtspiegelpaneel mit Leuchtdioden (100, 200, 300, 400, 500, 600), aufweisend:
- eine erste transparente Glasscheibe (1) mit zwei Hauptseiten (11, 12), so genannte vordere Fläche (11) bzw. rückseitige Fläche (12), und einer Kante (13),
- einer Reflexionsschicht (2), um die Spiegelfunktion über die vordere Fläche (11) sicherzustellen, in einer ersten Zone, so genannte Spiegelzone,
- Leuchtdioden (5), welche die Leuchtfunktion bereitstellen,
- Mittel für die Diffusion (3) des Lichts, das über die vordere Fläche austritt, so genannte Diffusionsmittel, wodurch sie eine zweite Zone, so genannte Leuchtzone (30) bilden, die an die Spiegelzone angrenzt,
**dadurch gekennzeichnet, dass** die Dioden optisch mit der Kante (13) der ersten Glasscheibe gekoppelt sind für eine Führung in der Dicke der ersten Glasscheibe (1) des von den Dioden emittierten Lichts vor einer Extraktion des Lichts der Dioden durch die Diffusionsmittel (3), wobei die Reflexionsschicht (2) eine Schicht ist, die auf der Seite der vorderen Fläche angeordnet ist, abwesend in der Leuchtzone (30), wobei die Reflexionsschicht eine dünne Metallschicht umfasst, **dadurch gekennzeichnet, dass** diese dünne Metallschicht aus einer Schicht aus Chrom, aus Niobium, aus Niobiumnitrid oder aus Stahl ausgewählt ist und dass in der Spiegelzone (20) die erste Glasscheibe (1) mit der Reflexionsschicht (2) einen Lichttransmissionsgrad kleiner oder gleich 25 % und einen Lichtreflexionsfaktor, gemessen auf der Seite der vorderen Fläche (11), ab mindestens 20 % aufweist und dass oberhalb der dünnen Metallschicht eine mineralische, dielektrische Oberschicht angeordnet ist, die ein Oxid und/oder ein Nitrid ist.

2. Leuchtspiegelpaneel mit Leuchtdioden (100, 200, 300, 400, 500, 600) nach Anspruch 1, **dadurch gekennzeichnet, dass** die dünne Metallschicht eine Schicht aus Chrom ist.

3. Leuchtspiegelpaneel mit Leuchtdioden (100, 200, 300, 400, 500, 600) nach Anspruch 1 oder Anspruch 2, **dadurch gekennzeichnet, dass** die Oberschicht dünn ist.

4. Leuchtspiegelpaneel mit Leuchtdioden (100, 200, 300, 400, 500, 600) nach Anspruch 1 bis 3, **dadurch gekennzeichnet, dass** die Reflexionsschicht (2) ein Stapel aus Dünnschichten ist mit einer etwaigen dünnen, insbesondere dielektrischen, Unterschicht, zum Beispiel ein Oxid und/oder ein Nitrid, der dünnen Metallschicht und der dünnen, insbesondere dielektrischen, Oberschicht, zum Beispiel ein Oxid und/oder ein Nitrid.

5. Leuchtspiegelpaneel mit Leuchtdioden (100, 300, 400, 500, 600) nach einem der Ansprüche 1 bis 3, **dadurch gekennzeichnet, dass** die Reflexionsschicht (2) ein Stapel aus Dünnschichten ist mit einer dünnen Unterschicht aus Siliziumoxid, einer dünnen Metallschicht aus Chrom, der Oberschicht aus Siliziumnidrid und einer etwaigen weiteren Oberschicht auf Basis von gegebenenfalls oxidiertem Titan.

6. Leuchtspiegelpaneel mit Leuchtdioden (200) nach einem der Ansprüche 1 bis 3, **dadurch gekennzeichnet, dass** die Reflexionsschicht (2) ein Stapel aus Dünnschichten ist mit:
- einer dünnen Unterschicht, die aus einer Schicht aus Siliziumnidrid, aus Titanoxid, aus Zinnoxid, aus Zinn-Zink-Mischoxid, aus Silizium- und Zirkoniumnidrid ausgewählt ist,
- einer dünnen Metallschicht aus Niobium oder Niobiumnitrid,
- der dünnen Unterschicht, die aus einer Schicht aus Siliziumnidrid, aus Titanoxid, aus Zinnoxid, aus Zinn-Zink-Mischoxid, aus Silizium- und Zirkoniumnidrid ausgewählt ist,
und dass vorzugsweise die Unterschicht und die Oberschicht identisch sind.

7. Leuchtspiegelpaneel mit Leuchtdioden (100, 200, 300, 400, 500, 600) nach einem der Ansprüche 1 bis 6, **dadurch gekennzeichnet, dass** die vordere Fläche (11) der ersten Glasscheibe mit der Reflexionsschicht (2) beschichtet ist und die erste Glasscheibe thermisch vorgespannt ist mit der Reflexionsschicht und gegebenenfalls mit einer oder mit Schichten (3), insbesondere aus Email oder auf Basis von Glasfritten, zur Bildung der Diffusionsmittel auf der ersten Glasscheibe, und/oder gegebenenfalls mit einer Dekorschicht (4"), insbesondere aus Email oder auf Basis von Glasfritten, auf der rückseitigen Fläche (12) der ersten Glasscheibe.

8. Leuchtspiegelpaneel mit Leuchtdioden (200) nach einem der Ansprüche 1 bis 3, **dadurch gekennzeichnet, dass** die Reflexionsschicht (2) ein Stapel aus Dünnschichten ist, der eine dünne Metallschicht aus Stahl und die dünne Oberschicht aus Titannitrid umfasst.

9. Leuchtspiegelpaneel mit Leuchtdioden (100, 200, 400, 500, 600) nach einem der vorhergehenden Ansprüche, **dadurch gekennzeichnet, dass** die Oberfläche der Leuchtzone (30) und der Spiegelzone (20) oder der Spielgelzonen im Wesentlichen die gesamte vordere Fläche (11) der ersten Glasscheibe (1) bedeckt.

10. Leuchtspiegelpaneel mit Leuchtdioden (300) nach einem der Ansprüche 1 bis 8, **dadurch gekennzeichnet, dass** die vordere Fläche (11) eine transparente Zone (10) angrenzend an die Spiegelzone (20) und an die Leuchtzone (30) umfasst und vorzugsweise die rückseitigen Fläche (12) auch eine transparente Zone (10') der transparenten Zone (10) gegenüber umfasst, vorzugsweise für eine Ausgestaltung, wo die vordere Fläche (12) wahrnehmbar ist.

11. Leuchtspiegelpaneel mit Leuchtdioden (100, 200, 400) nach einem der vorhergehenden Ansprüche, **dadurch gekennzeichnet, dass** auf einer so genannten nackten Oberfläche der vorderen Fläche (12) der Spiegelzone (20) gegenüber die rückseitige Fläche keine opaken, reflektierenden oder diffundierenden Elemente, insbesondere in Schicht(en), aufweist und der Lichttransmissionsgrad in dieser nackten Oberfläche gemessen wird.

12. Leuchtspiegelpaneel mit Leuchtdioden (300, 400, 600) nach einem der Ansprüche 1 bis 10, **dadurch gekennzeichnet, dass** die rückseitige Fläche (12), auf der gesamten Oberfläche der Spiegelzone (20) gegenüber, opake, reflextierende oder diffundierende Elemente (2', 2", 4'), insbesondere in Schicht(en) aufweist, und der Lichttransmissionsgrad der der Anordnung ist, welche die erste Glasscheibe, die Reflexionsschicht aufweist und nicht die opaken, reflektierenden oder diffundierenden Elemente (2', 2", 4') umfasst.

13. Leuchtspiegelpaneel mit Leuchtdioden (300, 500, 600) nach einem der vorhergehenden Ansprüche, **dadurch gekennzeichnet, dass** in der Ausgestaltung, wo die rückseitige Fläche (12) wahrnehmbar ist, die rückseitige Fläche (12) eine Reflexionsschicht (2, 2", 4'), so genannte weitere Reflexionsschicht, der Reflexionsschicht (2) gegenüber umfasst, welche einen rückseitigen Spiegel (20', 20", 40') bildet, und vorzugsweise die erste Glasscheibe mit der weiteren Reflexionsschicht einen Lichtreflexionsfaktor, gemessen auf der Seite der rückseitigen Fläche, aufweist, der mit dem Lichtreflexionsfaktor im Wesentlichen identisch ist.

14. Leuchtspiegelpaneel mit Leuchtdioden (100) nach einem der Ansprüche 1 bis 11, **dadurch gekennzeichnet, dass** in der Ausgestaltung, wo die rückseitige Fläche (12) verdeckt oder zu verdecken ist, insbesondere gegen eine Wand (15) ist, die rückseitige Fläche (12) eine Reflexionsschicht, so genannte weitere Reflexionsschicht (4), den Diffusionsmitteln (3) gegenüber umfasst.

15. Leuchtspiegelpaneel mit Leuchtdioden (400) nach einem der vorhergehenden Ansprüche, **dadurch gekennzeichnet, dass** in der Ausgestaltung, wo die rückseitige Fläche (12) verdeckt oder zu verdecken ist, insbesondere gegen eine Wand (15) ist, das Paneel eine Dekorschicht (4") auf der rückseitigen Fläche und der Reflexionsschicht (2) gegenüber umfasst, deren Breite geringer als die Breite der Reflexionsschicht ist, die insbesondere ein Motiv, eine Kennzeichnung, ein Logo, einen Text bildet und der Lichttransmissionsgrad mindestens 1 % beträgt.

16. Leuchtspiegelpaneel mit Leuchtdioden (100, 200, 300, 400, 500) nach einem der vorhergehenden Ansprüche, **dadurch gekennzeichnet, dass** das Paneel einteilig ist, wobei die erste Glasscheibe (1) die einzige ist und die Reflexionsschicht (2) auf der vorderen Fläche (11) abgeschieden ist.

17. Leuchtspiegelpaneel mit Leuchtdioden (600) nach einem der Ansprüche 1 bis 15, **dadurch gekennzeichnet, dass** das Paneel mehrteilig ist, die erste Glasscheibe (1) durch eine transparente Verbundzwischenlage aus Kunststoff, mit einer zweiten transparenten Glasscheibe (1') mit zwei Hauptseiten (11', 12') fest verbunden ist, wovon die eine die so genannte Verbindungsseite, da durch die Zwischenlage mit der rückseitigen Fläche der ersten Glasscheibe verbunden, und die andere die so genannte Außenseite ist.

18. Leuchtspiegelpaneel mit Leuchtdioden (100) nach einem der vorhergehenden Ansprüche, **dadurch gekennzeichnet, dass** sie ein elektrisches Heizsystem auf der Seite der rückseitigen Fläche und mindestens der Spiegelzone gegenüber aufweist, wobei das System insbesondere ausgewählt ist aus
- einer dünnen elektrischen, insbesondere transparenten, Heizschicht, zum Beispiel aus Fluor-dotiertem Zinnoxid,
- einem Heiznetz auf Basis einer leitenden Email, insbesondere mit Silber,
- einem selbstklebenden Heizfilm.

19. Verfahren zur Herstellung einer Leuchtspiegelpaneel mit Leuchtdioden (100, 200, 300, 400, 500, 600) nach einem der vorhergehenden Paneelansprüche, **dadurch gekennzeichnet, dass** es nach Abscheiden der/von Schicht(en) auf der vorderen Fläche (11) der ersten Scheibe (1) zur Bildung der Reflexionsschicht (2) eine Wärmebehandlung bei mindestens 450 °C gefolgt von einem Vorspannvorgang umfasst.

20. Verfahren zur Herstellung einer Leuchtspiegelpaneel mit Leuchtdioden (100, 200, 300, 500, 600) nach dem vorhergehenden Anspruch, **dadurch gekennzeichnet, dass** es das Abscheiden einer Schicht auf Basis von Bindemittel aus Glasfritten zur Bildung einer Dekorschicht (4") oder einer Diffusionsschicht zur Bildung der Diffusionsmittel (3) umfasst und dass die Wärmebehandlung das Schmelzen der Glasfritte zur Bildung der Diffusionsmittel (3) bewirkt.

21. Verfahren zur Herstellung einer Leuchtspiegelpaneel mit Leuchtdioden (100, 200, 300, 600, 600) nach Anspruch 19 oder 20, **dadurch gekennzeichnet, dass** das Abscheiden der/von Schicht(en) zur Bildung der Reflexionsschicht (2) vorwiegend oder sogar ausschließlich durch physikalische Abscheidung aus der Dampfphase oder vorwiegend oder sogar ausschließlich durch Kathodenzerstäubung erfolgt.

22. Verfahren zur Herstellung einer Leuchtspiegelpaneel mit Leuchtdioden (100, 200, 300, 500, 600) nach einem der Ansprüche 19 bis 21, **dadurch gekennzeichnet, dass** das Abscheiden der/von Schicht(en) zur Bildung der Reflexionsschicht (2) teilweise erfolgt, das heißt nur in der Zone, die zur Bildung der Spiegelzone bestimmt ist.

## Claims

1. Light-emitting diode comprising illuminating mirror panel (100, 200, 300, 400, 500, 600), which comprises:
- a first transparent glass sheet (1) with two main faces (11, 12), called the front face (11) and the back face (12) respectively, and an edge face (13);
- a reflective layer (2) providing the mirror function via the front face (11), in a first zone called the mirror zone;
- light-emitting diodes (5), providing the illumination function; and
- means (3) for scattering the light exiting via the front face, called scattering means, thus forming a second zone, called the illuminating zone (30), adjacent the mirror zone,
**characterized in that** the diodes are optically coupled to the edge face (13) of the first glass sheet in order for the light emitted by the diodes to be guided in the thickness of the first glass sheet (1) before the light from the diodes is extracted by the scattering means (3), the reflective layer (2) being a layer that is placed on the same side as the front face and that is absent from the illuminating zone (30), the reflective layer comprising a thin metal layer,
**characterized in that** this thin metal layer is chosen from a layer of chromium, niobium, niobium nitride or steel,
and **in that**, in the mirror zone (20), the first glass sheet (1) with the reflective layer (2) has a luminous transmission of 25% or less and a luminous reflection, measured on the same side as the front face (11), of at least 20%,
and **in that** a mineral, dielectric overlayer, which is an oxide and/or a nitride, is placed on the thin metal layer.

2. Light-emitting diode comprising illuminating mirror panel (100, 200, 300, 400, 500, 600) according to Claim 1, **characterized in that** the thin metal layer is a layer of chromium.

3. Light-emitting diode comprising illuminating mirror panel (100, 200, 300, 400, 500, 600) according to either one of Claims 1 and 2, **characterized in that** the overlayer is thin.

4. Light-emitting diode comprising illuminating mirror panel (100, 200, 300, 400, 500, 600) according to Claim 1 to 3, **characterized in that** the reflective layer (2) is a thin-layer multilayer comprising an optional, thin, especially dielectric, underlayer, for example an oxide and/or a nitride, the thin metal layer and the thin, especially dielectric, overlayer, an oxide and/or a nitride for example.

5. Light-emitting diode comprising illuminating mirror panel (100, 300, 400, 500, 600) according to one of Claims 1 to 3, **characterized in that** the reflective layer (2) is a thin-layer multilayer comprising a thin silica underlayer, a thin layer of chromium metal, the silica nitride overlayer, and optionally another overlayer based on optionally oxidized titanium.

6. Light-emitting diode comprising illuminating mirror panel (200) according to one of Claims 1 to 3, **characterized in that** the reflective layer (2) is a thin-layer multilayer comprising:
- a thin underlayer chosen from a layer of silicon nitride, titanium oxide, tin oxide, zinc tin oxide, and silicon zirconium nitride;
- a thin metal layer of niobium or niobium nitride; and
- the thin overlayer chosen from a layer of silicon nitride, titanium oxide, tin oxide, zinc tin oxide, and silicon zirconium nitride,
and **in that** the underlayer and the overlayer are preferably identical.

7. Light-emitting diode comprising illuminating mirror panel (100, 200, 300, 400, 500, 600) according to one of Claims 1 to 6, **characterized in that** the front face (11) of the first glass sheet is coated with the reflective layer (2), and the first glass sheet is thermally tempered with said reflective layer, and optionally with one or more layers (3), especially made of enamel or based on glass frit, forming the scattering means on the first glass sheet and/or optionally with a decorative layer (4"), especially made of enamel or based on glass frit, on the back face (12) of the first glass sheet.

8. Light-emitting diode comprising illuminating mirror panel (200) according to one of Claims 1 to 3, **characterized in that** the reflective layer (2) is a thin-layer multilayer comprising a thin metal layer of steel and the thin overlayer of titanium nitride.

9. Light-emitting diode comprising illuminating mirror panel (100, 200, 400, 500, 600) according to one of the preceding claims, **characterized in that** the illuminating zone (30) and the mirror zone (20) or mirror zones cover substantially the entire front face (11) of the first glass sheet (1).

10. Light-emitting diode comprising illuminating mirror panel (300) according to one of Claims 1 to 8, **characterized in that** the front face (11) comprises a transparent zone (10) adjacent the mirror zone (20) and the illuminating zone (30), and preferably the back face (12) also comprises a transparent zone (10') opposite said transparent zone (10), preferably for a configuration where the back face (12) can be seen.

11. Light-emitting diode comprising illuminating mirror panel (100, 200, 400) according to any one of the preceding claims, **characterized in that**, on what is called a bare area of the back face (12), opposite the mirror zone (20), the back face is free from opaque, reflective or scattering elements, especially (a) layer(s), and said luminous transmission is measured in this bare area.

12. Light-emitting diode comprising illuminating mirror panel (300, 400, 600) according to any one of Claims 1 to 10, **characterized in that** the back face (12) comprises, over the entire area opposite the mirror zone (20), opaque, reflective or scattering elements (2', 2", 4'), especially (a) layer(s), and said luminous transmission is that of the assembly comprising the first glass sheet, the reflective layer and not comprising said opaque, reflective or scattering elements (2', 2", 4').

13. Light-emitting diode comprising illuminating mirror panel (300, 500, 600) according to any one of the preceding claims, **characterized in that**, in the configuration where the back face (12) can be seen, the back face (12) comprises a reflective layer (2', 2", 4'), called the other reflective layer, opposite the reflective layer (2), forming a back mirror (20' 20", 40'), and preferably the first glass sheet with the other reflective layer has a luminous reflection, measured on the same side as the back face, substantially identical to said luminous reflection.

14. Light-emitting diode comprising illuminating mirror panel (100) according to any one of Claims 1 to 11, **characterized in that**, in the configuration where the back face (12) is masked or to be masked, especially placed against a wall (15), the back face (12) comprises a reflective layer, called the other reflective layer (4), opposite the scattering means (3).

15. Light-emitting diode comprising illuminating mirror panel (400) according to any one of the preceding claims, **characterized in that**, in the configuration where the back face (12) is masked or to be masked, especially placed against a wall (15), the panel comprises a decorative layer (4"), on the back face and opposite the reflective layer (2), narrower than the width of the reflective layer, especially forming a pattern, a graphic, a logo and/or text, and said luminous transmission is at least 1%.

16. Light-emitting diode comprising illuminating mirror panel (100, 200, 300, 400, 500) according to any one of the preceding claims, **characterized in that** the panel is monolithic, the first glass sheet (1) being the only glass sheet used, and the reflective layer (2) is deposited on the front face (11).

17. Light-emitting diode comprising illuminating mirror panel (600) according to any one of Claims 1 to 15, **characterized in that** the panel is a multiple unit, the first glass sheet (1) is securely fastened, by a transparent plastic lamination interlayer, to a second transparent glass sheet (1') with two main faces (11', 12'), one of which is called the joining face because it is joined to the back face of the first glass sheet by said interlayer, and the other of which is called the external face.

18. Light-emitting diode comprising illuminating mirror panel (100) according to any one of the preceding claims, **characterized in that** it comprises an electrical heating system on the same side as the back face, and at least opposite the mirror zone, this system especially being chosen from:
- a thin, especially transparent, electrical heating layer, made of fluorine-doped tin oxide for example;
- a heating grid based on a conductive enamel, especially a silver-containing conductive enamel; and
- a self-adhesive heating film.

19. Process for manufacturing the light-emitting diode comprising illuminating mirror panel (100, 200, 300, 400, 500, 600) according to any one of the preceding panel claims, **characterized in that** it comprises, after the one or more layers forming the reflective layer (2) have been deposited on the front face (11) of the first sheet (1), a heat treatment at at least 450°C followed by a tempering operation.

20. Process, for manufacturing the light-emitting diode comprising illuminating mirror panel (100, 200, 300, 500, 600), according to the preceding claim, **characterized in that** it comprises depositing a glass-frit binder based layer, in order to form a decorative layer (4") or a scattering layer forming the scattering means (3), and **in that** the heat treatment melts the glass frit in order to form the scattering means (3).

21. Process for manufacturing the light-emitting diode comprising illuminating mirror panel (100, 200, 300, 500, 600), according to either of Claims 19 and 20, **characterized in that** deposition of the layer(s) used to form the reflective layer (2) is mainly and even exclusively carried out by physical vapor deposition, especially mainly and even exclusively by sputtering.

22. Process for manufacturing the light-emitting diode comprising illuminating mirror panel (100, 200, 300, 500, 600), according to one of Claims 19 to 21, **characterized in that** deposition of the layer(s) used to form the reflective layer (2) is partial deposition, i.e. deposition only in the zone intended to form the mirror zone.
